# EUROPEAN PATENT SPECIFICATION

(11) **EP 3 618 141 B1**
(45) Date of publication and mention of the grant of the patent: **23.11.2022**
(21) Application number: 18191857.4
(22) Date of filing: 30.08.2018
(51) Int. Cl.: H02H 7/18, B60L 3/04, B60L 3/00, H01M 50/204, H01M 50/583

(54) **LOCATION OF FUSES IN A BATTERY STORAGE SYSTEM**
ANORDNUNG VON SICHERUNGEN IN EINEM BATTERIE-SPEICHERSYSTEM
EMPLACEMENT DE FUSIBLES DANS UN SYSTÈME DE STOCKAGE DE BATTERIE

(43) Date of publication of application: 04.03.2020
(73) Proprietor: ABB Schweiz AG, 5400 Baden (CH)
(72) Inventor: Meyer, Francesca, 8006 Zürich (CH); Traub, Felix, 5413 Birmenstorf (CH); Wicki, Stefan, 5702 Niederlenz (CH); Pfister, Stefan, 8953 Dietikon (CH)
(74) Representative: Qip Patentanwälte Dr. Kuehn & Partner mbB

(56) References cited:
- EP-A1- 2 006 971
- US-A1- 2015 147 610
- US-B2- 9 130 405

## Description

### FIELD OF THE INVENTION

The invention relates to a battery storage system and to a transportation vehicle with such a battery storage system.

### BACKGROUND OF THE INVENTION

Electric batteries, which are usually composed of a plurality of battery cells, are increasingly used in transportation applications. Due to the high power and energy of the battery storage system in such applications, it may be beneficial to add auxiliary electrical components to the battery cells to increase performance, lifetime, and safety of the battery storage system. Typical auxiliary electrical components, which are added to the battery cells, are, for example, contactors, disconnectors, fuses, current and voltage sensors and/or control boards.

Unlike systems powered from an electrical grid, energy is intrinsically contained in the battery cells, therefore servicing and replacement of parts may be generally more difficult, since service personnel may be exposed to electrical voltage during work. On the other hand, service work should be as simple as possible with good accessibility of the parts and time consuming intermediate steps are not desired.

Furthermore, in the risk of a short circuit between two potential levels may be always present, since the battery cells, which, when charged, are always on potential, are an inherent property of the battery storage system. Therefore, additional safety measures may have to be included in the design of a battery storage system to safely interrupt high currents in a fault case (e.g. due to short circuit, overcurrent or mismatched load connection). Therefore, not only the safety of personnel conducting service work on a battery storage system, but also the electrical protection of the components in the battery storage system may be of importance.

EP 2 006 971 A1 shows a power storage device, which may be used in rolling stock. The power storage device comprises four groups of battery cells connected in series, which are connected via fuses and two switches with a converter, which supplies a load.

### DESCRIPTION OF THE INVENTION

It is an objective of the invention to increase the electrical protection of components of a battery storage system. It is a further objective of the invention to better protect service personnel of the battery storage system.

These objectives are achieved by the subject-matter of the independent claims. Further exemplary embodiments are evident from the dependent claims and the following description.

An aspect of the invention relates to a battery storage system. A battery storage system may comprise a plurality of electrically interconnected battery cells and further electric equipment for charging, discharging and/or controlling the battery cells.

The battery storage system may be designed for high-power applications and/or for high-energy applications, such as transportation and/or power quality. Here, high power may refer to currents of more than 10 A and/or voltages of more than 60 V.

According to an embodiment of the invention, the battery storage system comprises a battery compartment, an electrical component compartment and optionally a disconnector compartment. All these compartments may be mechanically interconnected and/or may have a common frame. They all may be provided as separated parts of a cabinet. Each compartment may be accessible by a separate door, which prevents access to the components in the interior of the compartment, in particular, when they are on potential. When the respective door is closed, the components in each compartment may be protected from being touched by a person.

The battery compartment accommodates a plurality of battery cells. These battery cells may be electrically connected in series and/or in parallel and may store the electrical energy provided by the battery storage system. Here and in the following, "accommodated" may mean that the battery cells are mechanically connected to the interior of the compartment.

The electrical component compartment accommodates electrical components electrically connectable with the battery cells. For example, the battery cells may be connected to electrical components such as connectors, sensors, resistors, etc. In general, the electrical components in the electrical component compartment may comprise components that may have to be maintained and/or exchanged more often than the battery cells. Here and in the following, "accommodated" may mean that the electrical components are mechanically connected to the interior of the compartment.

The disconnector is adapted for electrically connecting the electrical components to the battery cells and for electrically disconnecting the electrical components from the battery cells. The disconnector may be located outside of the battery compartment and the electrical component compartment and/or the disconnector may be accommodated in a further compartment. The disconnector may comprise mechanical switches, which may be actuated manually. The disconnector may provide a separation of contacts, for example after the circuit already was opened by a switch before. The switches may be mechanically connected, such that they solely can be simultaneously switched.

According to the invention, the battery storage system further comprises a fuse in the electrical component compartment in an electrical line from the electrical components to the disconnector and a fuse in the battery component compartment in an electrical line from the battery cells to the disconnector. In general, a fuse may be a device, which, when a current about a specific threshold is applied to it, permanently disconnects the line it is interconnected in. Usually, a fuse comprises a wire, which melts, when a current about a threshold is applied.

When the disconnector is closed, the fuse in the electrical component compartment provides a protection of the electrical components and the battery cells. The fuse in the battery compartment may provide an additional protection for the battery cells, even when the disconnector is opened. The fuse also may clear faults that a fuse in the electrical compartment cannot clear in any case, such as short circuits that are limited to the battery cell compartment and/or that happen at the cable glands.

The fuse may be strategically placed such that not only the electrical components themselves are protected from damage due to abnormal currents but also service personnel is protected in the best possible way during an unintended fault, e.g. during service of the battery cells in the battery compartment.

The fuse in the electrical component compartment may help to prevent damage to the battery storage system and in particular the electrical components due to a fault that lead to high fault currents via the battery terminals. The fault may have originated inside or outside the battery compartment. The corresponding fuse in the electrical component compartment may be well accessible and easily replaceable by service personnel.

Since battery cells usually contain energy at every moment in time, merely disconnecting them from the electrical components may not provide protection from a short circuit that could happen after the disconnector is opened. For example, such a short circuit may be
caused at a cable gland, where a cable enters the battery compartment and/or between battery terminals during servicing.

A short circuit within the battery compartment that does not propagate to the electrical component compartment may be interrupted by the fuse in the battery compartment. In this case, more thorough servicing may be required for the replacement of the fuse, since the battery compartment may be stronger protected from access as the electrical component compartment. More protective equipment may be needed in this case to perform servicing.

The fuses may be placed to reduce effort during service and may increase safety when replacing the battery cells and/or modules. The electrical components and the battery cells may have an increased lifetime due to fast and effective clearing of faulty currents. The fuses may provide an additional safety feature for service personnel. The fuse in the battery compartment may clear faults even when the fuse in the electrical component compartment is disconnected from the battery cells.

According to the invention, the fuse in the electrical component compartment has a lower current rating and/or higher reaction speed than the fuse in the battery compartment. The fuses in the different compartments may be selected to be of different current ratings and/or reaction speeds to provide a fallback solution. One fuse may be intended to interrupt the current, the other fuse may act as a redundant protection.

Such fuses may provide a simplified service procedure since one fuse may be located outside the battery compartment and may be reliably disconnected from the battery energy supply during replacement. The other fuse with higher current rating and/or lower reaction speed may be located within the battery compartment. When this fuse is blown, the battery storage system may have to be analyzed in more detail, since the fault originated inside the battery cell assembly and not merely propagated into it.

In general, the battery cells in the battery compartment may be connected via the disconnector with two or more electrical lines that are disconnectable by the disconnector. In one, some or all of these lines, a fuse may be interconnected, either on the side of the electrical component compartment or on the side of the battery cell compartment or on both sides.

According to an embodiment of the invention, the fuse in the battery compartment is connected in a line to a positive input of the battery cells. The battery cells may be interconnected into an assembly having one positive input or terminal and one negative input
or terminal. The fuse on the side of the battery compartment may be connected into the line from the disconnector to the positive input.

According to an embodiment of the invention, the fuse in the battery compartment is connected in a line to a negative input of the battery cells. The fuse on the side of the battery compartment may be connected into the line from the disconnector to the negative input.

According to an embodiment of the invention, a first fuse in the battery compartment is connected in a line to a positive input of the battery cells and a second fuse in the battery compartment is connected in a line to a negative input of the battery cells. It also may be that a fuse is interconnected into both lines from the disconnector to the inputs. Both or all fuses in the battery compartment may have the same current rating and/or the same reaction speed.

According to an embodiment of the invention, the fuse in the electrical component compartment is connected in a positive line to the disconnector, which is connectable by the disconnector with a positive input of the battery cells. The fuse on the side of the electrical component compartment may be connected into the line from the electrical components to the positive input.

According to an embodiment of the invention, the fuse in the electrical component compartment is connected in a negative line to the disconnector, which is connectable by the disconnector with a negative input of the battery cells. The fuse on the side of the electrical component compartment may be connected into the line from the electrical components to the positive input.

According to an embodiment of the invention, a first fuse in the electrical component compartment is connected in a positive line to the disconnector, which is connectable by the disconnector with a positive input of the battery cells and a second fuse in the electrical component compartment is connected in a negative line to the disconnector, which is connectable by the disconnector with a negative input of the battery cells. Both or all fuses in the electrical component compartment may have the same current rating and/or the same reaction speed.

According to an embodiment of the invention, the one or more fuses in the electrical component compartment are connected between an electrical component and the disconnector without an electrical component between the respective fuse and the disconnector. Thus, all electrical components may be protected.

According to an embodiment of the invention, the battery cells are connected in a first group and a second group of battery cells, which are galvanically separated in the battery compartment. Galvanically separated in the battery compartment may mean that there are no lines and/or switches in the battery compartment, which electrically connect inputs of one group with another group. It also may be that the battery cells are provided in groups which are solely electrically connected via the electrical component compartments. In every group, the battery cells may be interconnected with each other in parallel and/or in series. It has to be noted that also three or more such groups are possible.

The disconnector may be adapted for electrically connecting the electrical components to the first group and the second group of battery cells and for electrically disconnecting the electrical components from the first group and the second group of battery cells.

Every group may be connected to the electrical components in the electrical component compartment with at least one fuse in the battery cell compartment and at least one fuse in the electrical component compartment, for example as described above and below.

According to an embodiment of the invention, the electrical component compartment comprises an intermediate line for electrically connecting the first group with the second group. This provides the opportunity to connect electrical components between the groups, which electrical components may be accessed outside of the battery compartment.

According to an embodiment of the invention, the disconnector is adapted for electrically connecting the first group with the second group via the intermediate line. For example, the groups may be connected in series via the intermediate line.

According to an embodiment of the invention, the battery storage system further comprises a fuse in the electrical component compartment connected in the intermediate line and/or a fuse in the battery compartment connected in a line, which is connectable by the disconnector to the intermediate line. Also the intermediate line may be protected with a fuse on side of the battery compartment and a further fuse on side of the electrical component compartment. The fuse in the electrical component compartment may have a lower current rating and/or a higher reaction speed as the fuse in the battery compartment.

According to an embodiment of the invention, the disconnector comprises a first mechanical switch for disconnecting a positive input of the battery cells from electrical components in the electrical component compartment and a second mechanical switch for disconnecting a negative input of the battery cells from electrical components in the electrical component compartment. As already mentioned, the first mechanical switch and the second mechanical switch may be mechanically coupled to be switched simultaneously.

Furthermore, the disconnector may comprise a third mechanical switch for disconnecting the intermediate line from the first group of battery cells and/or a fourth mechanical switch for disconnecting the intermediate line from the second group of battery cells.

According to an embodiment of the invention, the battery storage system further comprises a disconnector compartment accommodating the disconnector. Also the disconnector may be arranged inside a compartment, which, for example, also may have a door.

A further aspect of the invention relates to a transportation vehicle, such as an electric car, an electric bus, an electric tram and/or an electric railway vehicle, which comprises a battery storage system as described above and below. The battery storage system may be integrated in the transportation vehicle.

According to an embodiment of the invention, the transportation vehicle comprises a drivetrain, such as one or more electrical motors, suppliable by the battery storage system. For example, the transportation vehicle may be supplied by the battery energy storage system, when no power from an external power source, such as a catenary line, is present.

According to an embodiment of the invention, the transportation vehicle is suppliable from an electrical grid as energy source during operation of the drive. For example, a train, tram or bus as transportation vehicle may be supplied from an electrical grid, for example via a catenary line. Dependent on the power available, the battery storage system may be charged during operation of the drive.

The transportation vehicle also may be a hybrid train that additionally has a fuel powered engine. In this case, the battery storage system may be charged during braking.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a transportation vehicle according to an embodiment of the invention.
Fig. 2 schematically shows a battery storage system according to an embodiment of the invention.
Fig. 3 schematically shows a battery storage system according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

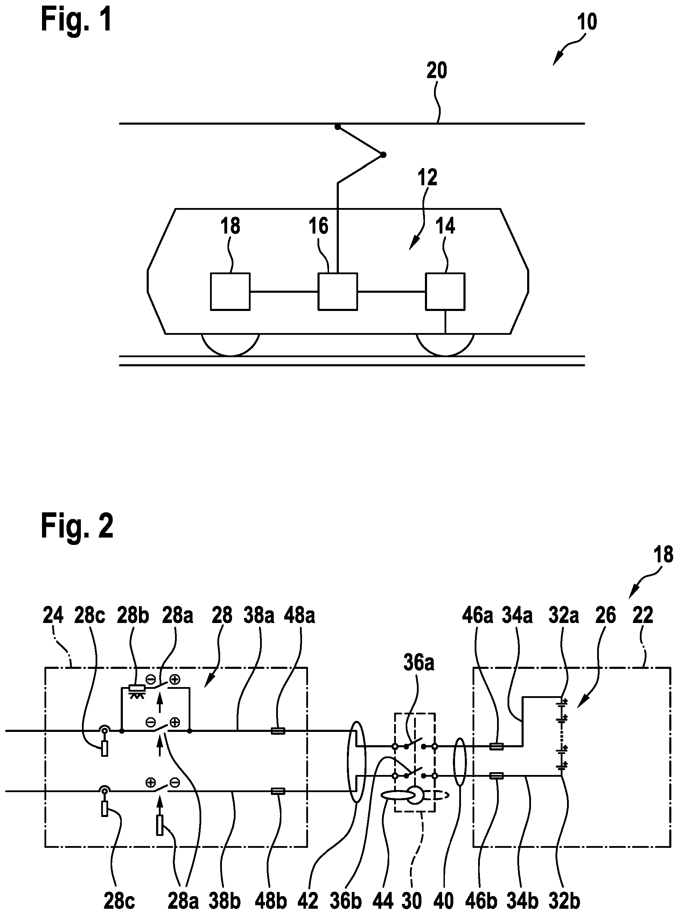

Fig. 1 shows a transportation vehicle 10 in the form of a railway vehicle. In general, the transportation vehicle 10 also may be a street vehicle, such as a bus. The transportation vehicle 10, such as a train or tram, comprises a drivetrain 12 with an electrical motor 14, which drives a wheel of the transportation vehicle 10. The drivetrain 12 furthermore comprises an electrical converter 16, which is adapted for generating an AC current supplied to the electrical motor 14. The converter 16 may be powered from a battery storage system 18 and/or an external electrical energy source 20, such as a catenary line of an AC or DC grid.

It may be that the battery storage system 18 is charged from the external energy source 20 and is then used, when no external energy source 20 is viable, which may be the case at specific sections of the railways. It also may be that the battery storage system 18 is charged during operation of the drivetrain 12 and the electrical motor 14 and/or that the battery storage system 18 supports the external energy source 20, dependent on the availability of power from the external energy source 20.

Fig. 2 shows the battery storage system 18 in more detail. The battery storage system comprises a compartment 22 and an electrical component compartment 24. For example, both compartments may be provided in a cabinet and/or each compartment 22, 24 may have a door for accessing the respective compartment 22, 24, which door protects the interior of the compartments 22, 24 from being touched by a service technician, when the respective door is closed.

The battery compartment 22 comprises battery cells 26, which may be connected in parallel and/or in series (as shown). The battery cells 26 are electrically connected with electrical components 28 in the electrical component compartment 24. For example, the electrical components 28 may comprise electrical connectors 28a, a recharging resistor 28b and sensors 28c and/or other electrical components.

The electrical components 28 in the electrical component compartment 24 are connected via a disconnector 30 with the battery cells 26. In particular, a positive input 32a of the battery cells 26 is connected via a positive line 34a or line on positive potential with a switch 36a of the disconnector 30. The switch 36 is connected with a further positive line 38a, which is connected to electrical components 28. A negative input 32b of the battery cells 26 is connected via a negative line 34b or line on negative potential with a further switch 36b of the disconnector 30. The switch 36 is connected with a further negative line 38b, which is connected to electrical components 28.

Via the lines 38a, 38b, opposite to the disconnector 30, the electrical components 28 are connected with an energy source, such as the grid 20 and/or the converter 16.

The lines 34a, 34b may be provided by a power cable 40, which interconnects the battery compartment 22 with the disconnector 30. The lines 38a, 38b may be provided by a power cable 42, which interconnects the electrical component compartment 24 with the disconnector 30.

The switches 36a, 36b of the disconnector 30 may be mechanical switches, which are mechanically connected, such that they are solely switchable simultaneously. The switches may be motor driven or may be manually operated. For example, the disconnector 30 and/or the switches 36a, 36b may be operated manually with a lever 44.

The battery storage system 18 may be protected by fuses 46a, 46b in the lines 34a, 34b and fuses 48a, 48b in the lines 38a, 38b. One of the fuses 46a, 46b and one of the fuses 48a, 48b may be omitted.

A fuse 46a in the battery compartment 22 may be connected in the line 34a to the positive input 32a of the battery cells 26. A fuse 46b in the battery compartment 22 may be connected in the line 34b to the negative input 32b of the battery cells 26. It also may be that both fuses 46a, 46b are present and that a first fuse 46a in the battery compartment 22 is connected in the line 34a to the positive input 32a of the battery cells 26 and that a second fuse 46b in the battery compartment 22 is connected in the line 34b to the negative input 32b of the battery cells 26.

On the side of the electrical component compartment 24, a fuse 48a may be connected in the positive line 38a to the disconnector 30. A fuse 48b may be connected in the negative line 38b to the disconnector 30. It also may be that both fuses 48a, 48b are present and that a first fuse 48a in the electrical component compartment 24 is connected in the positive line 38a to the disconnector 30 and that a second fuse 48b in the electrical component compartment 24 is connected in the negative line 38b to the disconnector 30.

It has to be noted that the one or more fuses 48a, 48b in the electrical component compartment 24 may be connected between an electrical component 28 and the disconnector 30 without an electrical component between the respective fuse 48a, 48b and the disconnector 30.

Putting the fuses 46a, 46b, 48a, 48b at multiple locations on both sides of the disconnector 30 within the battery storage system 18 may provide additional possibilities to clear a fault directly where it happens. This consequently opens the fault path of the short circuit and protects other components from overcurrent. Moreover, with the strategical placement of the fuses 46a, 46b, 48a, 48b, the ease for replacement after the burning of a fuse may be considered as well, i.e. faults that appear to be more common may be cleared by a fuse 48a, 48b that may be replaced fast.

During normal operation, when the disconnector 30 is in a closed position, the battery cells 26 and the electrical components 28 are protected in a cascading way via the fuses 46a, 46b, 48a, 48b. Fuses 48a and/or 48b may clear faults that may arise within the battery storage system 18 or outside of it and lead to overcurrent via the battery terminals/inputs 32a/32b. Fuses 46a and/or 46b may clear faults within the battery compartment 22 that do not affect the primary side electrical components 28, such as, for example, a short circuit at a cable gland of the cable 40.

Fuses 48a and/or 48b may be easily accessible and/or may lie within the electrical component compartment 24, which may be electrically disconnected from the battery compartment 22 for safe replacement during service. Placing fuses 48a and/or 48b in the electrical component compartment 24 may have the advantage that they lie in a section that may be disconnected from the battery compartment 22 for service aspects. Therefore, fuses 48a and/or 48b may be easily replaceable during servicing.

During service operation, when the disconnector 30 is in an opened position, the electrical components 28 and the fuses 48a and/or 48b are disconnected from the battery compartment 22. Fuses 48a and/or 48b may be no longer effective to clear faulty currents inside the battery compartment 22. Fuses 46a and/or 46b may address faults and/or may clear them reliably, for example in case of an unintended short circuit in the battery compartment 22. Fuses 46a and/or 46b may also be beneficial in case of an emergency during servicing, for example a tool falling into the battery compartment 22 and generating a short circuit.

The one or more fuses 48a, 48b in the electrical component compartment 24 have a lower current rating and/or higher reaction speed as the one or more fuses 46a, 46b in the battery compartment 22. The use of multiple fuse ratings may be helpful to address multiple failure modes. The different fuses 46a, 46b, 48a, 48b may be chosen such to complement each other in their functionality. For example, a fast acting fuse type may be combined with a slower melting type or a lower current fuse with one that has a higher current rating.

Fuses 48a and/or 48b may be chosen to be of a fast acting and/or low current type, which may interrupt most overcurrent scenarios that happen during normal operation of the battery storage system 18. This may be both faulty currents arising due to a short circuit within the battery storage system 18 as well as a short circuit outside the battery storage system 18 that may lead to high currents from the battery storage system 18 to the outside, such as an external energy source 20.

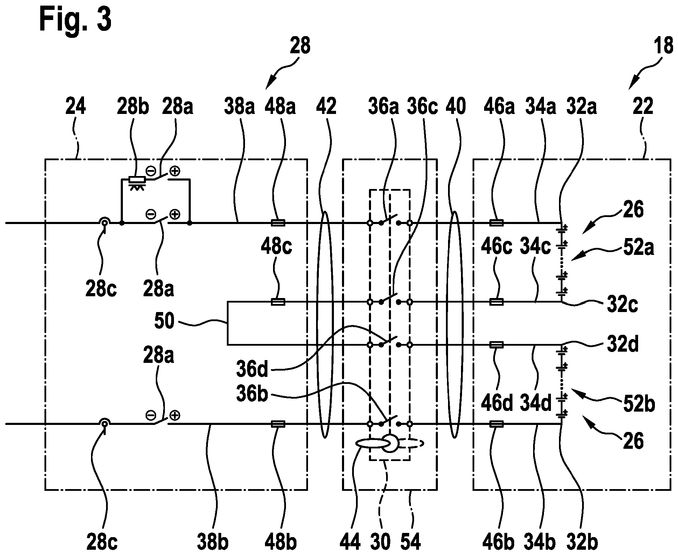

Fig. 3 shows a further battery storage system 18, in which the battery cells 26 are grouped into two groups 52a, 52b, which are solely connected via the disconnector 30 with each other. In particular, the battery cells 26 are connected in a first group 52a and a second group 52b of battery cells 26, which are galvanically separated in the battery compartment 22.

The two groups 52a, 52b of battery cells 26 may be interconnected with an intermediate line 50, that is arranged in the electrical component compartment 24, for example for interconnecting an electrical component 28 between the groups 52a, 52b and/or for servicing reasons.

The disconnector 30 may be adapted for electrically connecting the first group 52a with the second group 52b via the intermediate line 50. Besides the switches 36a, 36b, the disconnector 30 may comprise a third mechanical switch 36c for disconnecting the intermediate line 50 from the first group 52a of battery cells 26. The switch 36c may be connected via a line 34c with a negative input 32c of the first group 52a of battery cells 26. The disconnector 30 may comprise a fourth mechanical switch 36d for disconnecting the intermediate line 50 from the second group 52b of battery cells 26. The switch 36d may be connected via a line 34d with a positive input 32d of the second group 52b of battery cells 26. All switches 36a to 36d may be mechanically coupled to be switched simultaneously.

When the battery compartment 22 accommodates multiple groups 52a, 52b, one or more fuses 46a, 46b, 48a, 48b may be placed in each of the groups 52a, 52b to provide protection for each group 52a, 52b.

Furthermore, fuses 46c, 46d, 48c may be placed in electrical connections connecting the groups 52a, 52b with each other. In the electrical component compartment 24, a fuse 48c may be connected in the intermediate line 50. One or more fuses 46c and/or 46d may be connected in the battery compartment 22 in the lines 34c and/or 34d. The fuse 48c has a lower current rating and/or higher reaction speed as the one or more fuses 46c, 46d in the battery compartment 22.

It has to be noted that also, the disconnector 30 may be accommodated in a disconnector compartment 54, which also may be closed by a separate door.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. The scope of the invention is defined by the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: transportation vehicle
- 12: drive
- 14: electrical motor
- 16: electrical converter
- 18: battery storage system
- 20: external electrical energy source
- 22: battery compartment
- 24: electrical component compartment
- 26: battery cells
- 28: electrical component
- 28a: connector
- 28b: recharging resistor
- 28c: sensor
- 30: disconnector
- 32a: positive input
- 32b: negative input
- 32c: negative input
- 32d: positive input
- 34a: line
- 34b: line
- 34c: line
- 34d: line
- 36a: switch
- 36b: switch
- 36c: switch
- 36d: switch
- 38a: line
- 38b: line
- 40: power cable
- 42: power cable
- 44: lever
- 46a: fuse
- 46b: fuse
- 46c: fuse
- 46d: fuse
- 48a: fuse
- 48b: fuse
- 48c: fuse
- 50: intermediate line
- 52a: group of battery cells
- 52b: group of battery cells
- 54: disconnector compartment

## Claims

1. A battery storage system (18), comprising:
a battery compartment (22) accommodating a plurality of battery cells (26);
an electrical component compartment (24) accommodating electrical components (28) electrically connectable with the battery cells (26);
a disconnector (30) for electrically connecting the electrical components (28) to the battery cells (26) and for electrically disconnecting the electrical components (28) from the battery cells;
a fuse (48a, 48b) in the electrical component compartment (24) in an electrical line (38a, 38b) from the electrical components (28) to the disconnector (30);
a fuse (46a, 46b) in the battery component compartment (22) in an electrical line (34a, 34b) from the battery cells (26) to the disconnector (30);
wherein the fuse (48a, 48b) in the electrical component compartment (24) has a lower current rating and/or higher reaction speed than the fuse (46a, 46b) in the battery compartment (22).

2. The battery storage system (18) of claim 1,
wherein the fuse (46a) in the battery compartment (22) is connected in a line (34a) to a positive input (32a) of the battery cells (26).

3. The battery storage system (18) of one of the previous claims,
wherein the fuse (46b) in the battery compartment (22) is connected in a line (34b) to a negative input (32b) of the battery cells (26).

4. The battery storage system (18) of one of the previous claims,
wherein a first fuse (46a) in the battery compartment (22) is connected in a line (34a) to a positive input (32a) of the battery cells (26); and
wherein a second fuse (46b) in the battery compartment (22) is connected in a line (34b) to a negative input (32b) of the battery cells (26).

5. The battery storage system (18) of one of the previous claims,
wherein the fuse (48a) in the electrical component compartment (24) is connected in a positive line (38a) to the disconnector (30), which is connectable by the disconnector (30) with a positive input (32a) of the battery cells (26).

6. The battery storage system (18) of one of the previous claims,
wherein the fuse (48b) in the electrical component compartment (24) is connected in a negative line (38b) to the disconnector (30), which is connectable by the disconnector (30) with a negative input (32b) of the battery cells (26).

7. The battery storage system (18) of one of the previous claims,
wherein a first fuse (48a) in the electrical component compartment (24) is connected in a positive line (38a) to the disconnector (30), which is connectable by the disconnector (30) with a positive input (32a) of the battery cells (26);
wherein a second fuse (48b) in the electrical component compartment (24) is connected in a negative line (38b) to the disconnector (30), which is connectable by the disconnector (30) with a negative input (32b) of the battery cells (26).

8. The battery storage system (18) of one of the previous claims,
wherein the fuse (48a, 48b) in the electrical component compartment (24) is connected between an electrical component (28) and the disconnector (30) without an electrical component between the fuse (48a, 48b) and the disconnector (30).

9. The battery storage system (18) of one of the previous claims,
wherein the battery cells (26) are connected in a first group (52a) and a second group (52b) of battery cells (26), which are galvanically separated in the battery compartment (22);
wherein the electrical component compartment (24) comprises an intermediate line (50) for electrically connecting the first group (52a) with the second group (52b);
wherein the disconnector (30) is adapted for electrically connecting the first group (52a) with the second group (52b) via the intermediate line (50).

10. The battery storage system (18) of claim 10, further comprising:
a fuse (48c) in the electrical component compartment (24) connected in the intermediate line (50).

11. The battery storage system (18) of claim 10, further comprising: a fuse (46c, 46d) in the battery compartment (22) connected in a line (34c, 34d), which is connectable by the disconnector (30) to the intermediate line (50).

12. The battery storage system (18) of one of the previous claims,
wherein the disconnector (30) comprises a first mechanical switch (36a) for disconnecting a positive input (32a) of the battery cells (26) from electrical components (28) in the electrical component compartment (24);
wherein the disconnector (30) comprises a second mechanical switch (36b) for disconnecting a negative input (32b) of the battery cells (26) from electrical components (28) in the electrical component compartment (24);
wherein the first mechanical switch (36a) and the second mechanical switch (36b) are mechanically coupled to be switched simultaneously.

13. The battery storage system (18) of one of the previous claims, further comprising a disconnector compartment (54) accommodating the disconnector (30).

14. A transportation vehicle (10), comprising:
the battery storage system (18) according to one of the previous claims;
a drivetrain (12) suppliable by the battery storage system (18).

15. The transportation vehicle (10) of claim 14,
wherein the transportation vehicle (10) is suppliable from an electrical grid (20) as energy source during operation of the drivetrain (12).

## Patentansprüche

1. Batterie-Speichersystem (18), umfassend:
einen Batterieraum (22), der eine Mehrzahl von Batteriezellen (26) aufnimmt;
einen für elektrische Komponenten vorgesehenen Raum (24), der elektrische Komponenten (28) aufnimmt, die mit den Batteriezellen (26) elektrisch verbindbar sind;
einen Trennschalter (30) zum elektrischen Verbinden der elektrischen Komponenten (28) mit den Batteriezellen (26) und zum elektrischen Trennen der elektrischen Komponenten (28) von den Batteriezellen;
eine Sicherung (48a, 48b) in dem für elektrische Komponenten vorgesehenen Raum (24) in einer elektrischen Leitung (38a, 38b) von den elektrischen Komponenten (28) zu dem Trennschalter (30);
eine Sicherung (46a, 46b) in dem für Batteriekomponenten vorgesehenen Raum (22) in einer elektrischen Leitung (34a, 34b) von den Batteriezellen (26) zu dem Trennschalter (30);
wobei die Sicherung (48a, 48b) in dem für elektrische Komponenten vorgesehenen Raum (24) einen niedrigeren Nennstrom und/oder eine höhere Ansprechgeschwindigkeit als die Sicherung (46a, 46b) in dem Batterieraum (22) aufweist.

2. Batterie-Speichersystem (18) nach Anspruch 1,
wobei die Sicherung (46a) in dem Batterieraum (22) in einer Leitung (34a) zu einem positiven Eingang (32a) der Batteriezellen (26) geschaltet ist.

3. Batterie-Speichersystem (18) nach einem der vorangehenden Ansprüche,
wobei die Sicherung (46b) in dem Batterieraum (22) in einer Leitung (34b) zu einem negativen Eingang (32b) der Batteriezellen (26) geschaltet ist.

4. Batterie-Speichersystem (18) nach einem der vorangehenden Ansprüche,
wobei eine erste Sicherung (46a) in dem Batterieraum (22) in einer Leitung (34a) zu einem positiven Eingang (32a) der Batteriezellen (26) geschaltet ist; und
wobei eine zweite Sicherung (46b) in dem Batterieraum (22) in einer Leitung (34b) zu einem negativen Eingang (32b) der Batteriezellen (26) geschaltet ist.

5. Batterie-Speichersystem (18) nach einem der vorangehenden Ansprüche,
wobei die Sicherung (48a) in dem für elektrische Komponenten vorgesehenen Raum (24) in einer positiven Leitung (38a) zu dem Trennschalter (30) geschaltet ist, die durch den Trennschalter (30) mit einem positiven Eingang (32a) der Batteriezellen (26) verbindbar ist.

6. Batterie-Speichersystem (18) nach einem der vorangehenden Ansprüche,
wobei die Sicherung (48b) in dem für elektrische Komponenten vorgesehenen Raum (24) in einer negativen Leitung (38b) zu dem Trennschalter (30) geschaltet ist, die durch den Trennschalter (30) mit einem negativen Eingang (32b) der Batteriezellen (26) verbindbar ist.

7. Batterie-Speichersystem (18) nach einem der vorangehenden Ansprüche,
wobei eine erste Sicherung (48a) in dem für elektrische Komponenten vorgesehenen Raum (24) in einer positiven Leitung (38a) zu dem Trennschalter (30) geschaltet ist, die durch den Trennschalter (30) mit einem positiven Eingang (32a) der Batteriezellen (26) verbindbar ist;
wobei eine zweite Sicherung (48b) in dem für elektrische Komponenten vorgesehenen Raum (24) in einer negativen Leitung (38b) zu dem Trennschalter (30) geschaltet ist, die durch den Trennschalter (30) mit einem negativen Eingang (32b) der Batteriezellen (26) verbindbar ist.

8. Batterie-Speichersystem (18) nach einem der vorangehenden Ansprüche,
wobei die Sicherung (48a, 48b) in dem für elektrische Komponenten vorgesehenen Raum (24) zwischen einer elektrischen Komponente (28) und dem Trennschalter (30) geschaltet ist, ohne eine elektrische Komponente zwischen der Sicherung (48a, 48b) und dem Trennschalter (30) .

9. Batterie-Speichersystem (18) nach einem der vorangehenden Ansprüche,
wobei die Batteriezellen (26) in einer ersten Gruppe (52a) und einer zweiten Gruppe (52b) von Batteriezellen (26) geschaltet sind, die in dem Batterieraum (22) galvanisch getrennt sind;
wobei der für elektrische Komponenten vorgesehene Raum (24) eine Zwischenleitung (50) zum elektrischen Verbinden der ersten Gruppe (52a) mit der zweiten Gruppe (52b) umfasst;
wobei der Trennschalter (30) zum elektrischen Verbinden der ersten Gruppe (52a) mit der zweiten Gruppe (52b) über die Zwischenleitung (50) ausgelegt ist.

10. Batterie-Speichersystem (18) nach Anspruch 9, ferner umfassend:
eine Sicherung (48c) in dem für elektrische Komponenten vorgesehenen Raum (24), die in der Zwischenleitung (50) geschaltet ist.

11. Batterie-Speichersystem (18) nach Anspruch 10, ferner umfassend:
eine Sicherung (46c, 46d) in dem Batterieraum (22), die in einer Leitung (34c, 34d) geschaltet ist, die durch den Trennschalter (30) mit der Zwischenleitung (50) verbindbar ist.

12. Batterie-Speichersystem (18) nach einem der vorangehenden Ansprüche,
wobei der Trennschalter (30) einen ersten mechanischen Schalter (36a) zum Trennen eines positiven Eingangs (32a) der Batteriezellen (26) von elektrischen Komponenten (28) in dem für elektrische Komponenten vorgesehenen Raum (24) umfasst;
wobei der Trennschalter (30) einen zweiten mechanischen Schalter (36b) zum Trennen eines negativen Eingangs (32b) der Batteriezellen (26) von elektrischen Komponenten (28) in dem für elektrische Komponenten vorgesehenen Raum (24) umfasst;
wobei der erste mechanische Schalter (36a) und der zweite mechanische Schalter (36b) mechanisch gekoppelt sind, um gleichzeitig geschaltet zu werden.

13. Batterie-Speichersystem (18) nach einem der vorangehenden Ansprüche, ferner umfassend:
einen Trennschalterraum (54), der den Trennschalter (30) aufnimmt.

14. Transportfahrzeug (10), umfassend:
das Batterie-Speichersystem (18) nach einem der vorangehenden Ansprüche;
einen Antriebsstrang (12), der durch das Batterie-Speichersystem (18) versorgbar ist.

15. Transportfahrzeug (10) nach Anspruch 14,
wobei das Transportfahrzeug (10) während des Betriebs des Antriebsstrangs (12) aus einem elektrischen Netz (20) als Energiequelle versorgbar ist.

## Revendications

1. Système de stockage de batterie (18), comprenant :
un compartiment de batterie (22) logeant une pluralité d'éléments de batterie (26) ;
un compartiment de composants électriques (24) logeant des composants électriques (28) pouvant être connectés électriquement aux éléments de batterie (26) ;
un sectionneur (30) pour connecter électriquement les composants électriques (28) aux éléments de batterie (26) et déconnecter électriquement les composants électriques (28) des éléments de batterie ;
un fusible (48a, 48b) dans le compartiment de composants électriques (24) dans une ligne électrique (38a, 38b) entre les composants électriques (28) et le sectionneur (30) ;
un fusible (46a, 46b) dans le compartiment de composant de batterie (22) dans une ligne électrique (34a, 34b) entre les éléments de batterie (26) et le sectionneur (30) ;
dans lequel le fusible (48a, 48b) dans le compartiment de composants électriques (24) présente un courant nominal inférieur et/ou une vitesse de réaction supérieure à celui ou celle du fusible (46a, 46b) dans le compartiment de batterie (22).

2. Système de stockage de batterie (18) selon la revendication 1,
dans lequel le fusible (46a) dans le compartiment de batterie (22) est connecté dans une ligne (34a) à une entrée positive (32a) des éléments de batterie (26).

3. Système de stockage de batterie (18) selon l'une des revendications précédentes,
dans lequel le fusible (46b) dans le compartiment de batterie (22) est connecté dans une ligne (34b) à une entrée négative (32b) des éléments de batterie (26).

4. Système de stockage de batterie (18) selon l'une des revendications précédentes,
dans lequel un premier fusible (46a) dans le compartiment de batterie (22) est connecté dans une ligne (34a) à une entée positive (32a) des éléments de batterie (26) ; et
dans lequel un second fusible (46b) dans le compartiment de batterie (22) est connecté dans une ligne (34b) à une entrée négative (32b) des éléments de batterie (26).

5. Système de stockage de batterie (18) selon l'une des revendications précédentes,
dans lequel le fusible (48a) dans le compartiment de composants électriques (24) est connecté dans une ligne positive (38a) au sectionneur (30), qui peut être connectée par le sectionneur (30) à une entrée positive (32a) des éléments de batterie (26).

6. Système de stockage de batterie (18) selon l'une des revendications précédentes,
dans lequel le fusible (48b) dans le compartiment de composants électriques (24) est connecté dans une ligne négative (38b) au sectionneur (30), qui peut être connectée par le sectionneur (30) à une entrée négative (32b) des éléments de batterie (26).

7. Système de stockage de batterie (18) selon l'une des revendications précédentes,
dans lequel un premier fusible (48a) dans le compartiment de composants électriques (24) est connecté dans une ligne positive (38a) au sectionneur (30), qui peut être connectée par le sectionneur (30) à une entrée positive (32a) des éléments de batterie (26) ;
dans lequel un second fusible (48b) dans le compartiment de composants électriques (24) est connecté dans une ligne négative (38b) au sectionneur (30), qui peut être connectée par le sectionneur (30) à une entrée négative (32b) des éléments de batterie (26).

8. Système de stockage de batterie (18) selon l'une des revendications précédentes,
dans lequel le fusible (48a, 48b) dans le compartiment de composants électriques (24) est connecté entre un composant électrique (28) et le sectionneur (30) sans composant électrique entre le fusible (48a, 48b) et le sectionneur (30).

9. Système de stockage de batterie (18) selon l'une des revendications précédentes,
dans lequel les éléments de batterie (26) sont connectés en un premier groupe (52a) et un second groupe (52b) d'éléments de batterie (26), qui sont disposés selon une galvanisation séparée dans le compartiment de batterie (22) ;
dans lequel le compartiment de composants électriques (24) comprend une ligne intermédiaire (50) pour connecter électriquement le premier groupe (52a) au second groupe (52b) ;
dans lequel le sectionneur (30) est conçu pour connecter électriquement le premier groupe (52a) au second groupe (52b) par le biais de la ligne intermédiaire (50).

10. Système de stockage de batterie (18) selon la revendication 9, comprenant en outre :
un fusible (48c) dans le compartiment de composants électriques (24) connecté dans la ligne intermédiaire (50) .

11. Système de stockage de batterie (18) selon la revendication 10, comprenant en outre :
un fusible (46c, 46d) dans le compartiment de batterie (22) connecté dans une ligne (34c, 34d) qui peut être connectée par le sectionneur (30) à la ligne intermédiaire (50).

12. Système de stockage de batterie (18) selon l'une des revendications précédentes,
dans lequel le sectionneur (30) comprend un premier commutateur mécanique (36a) pour déconnecter une entrée positive (32a) des éléments de batterie (26) des composants électriques (28) dans le compartiment de composants électriques (24) ;
dans lequel le sectionneur (30) comprend un second commutateur mécanique (36b) pour déconnecter une entrée négative (32b) des éléments de batterie (26) des composants électriques (28) dans le compartiment de composants électriques (24) ;
dans lequel le premier commutateur mécanique (36a) et le second commutateur mécanique (36b) sont couplés mécaniquement pour être commutés simultanément.

13. Système de stockage de batterie (18) selon l'une des revendications précédentes, comprenant en outre
un compartiment de sectionneur (54) logeant le sectionneur (30).

14. Véhicule de transport (10), comprenant :
le système de stockage de batterie (18) selon l'une des revendications précédentes ;
une transmission (12) pouvant être alimentée par le système de stockage de batterie (18).

15. Véhicule de transport (10) selon la revendication 14,
dans lequel le véhicule de transport (10) peut être alimenté depuis un réseau électrique (20) en tant que source d'énergie pendant le fonctionnement de la transmission (12).
